# EUROPEAN PATENT SPECIFICATION

(11) **EP 4 088 628 B1**
(45) Date of publication and mention of the grant of the patent: **01.05.2024**
(21) Application number: 22172958.5
(22) Date of filing: 12.05.2022
(51) Int. Cl.: A47J 31/36

(54) **MACHINE FOR PRODUCING AN INFUSED BEVERAGE**
VORRICHTUNG FÜR DIE HERSTELLUNG EINES INFUSIERTEN GETRÄNKS
MACHINE POUR PRODUIRE UNE BOISSON INFUSÉE

(30) Priority: 14.05.2021 IT 202100012476
(43) Date of publication of application: 16.11.2022
(73) Proprietor: Capitani S.r.l., 22070 Solbiate (CO) (IT)
(72) Inventor: CAPITANI, Gionata, Albiolo (CO) (IT)
(74) Representative: Fabiano, Piero

(56) References cited:
- EP-A1- 1 721 553
- EP-A1- 2 915 465
- EP-A1- 3 730 007
- WO-A1-2013/150199
- WO-A1-2015/173123
- IT-A1- MI20 120 700

## Description

### Field of the invention

The present invention concerns a machine for producing an infused beverage, preferably a coffee-flavored beverage.

### Known art

The use of machines for generating infused beverages of different flavors, for example coffee, tea or aromatic herbal teas, is known.

A particular type of the aforesaid machines, using disposable capsules or pods, is recently witnessing an ever increasing diffusion; such capsules or pods contain a predefined single portion of substance to be subjected to infusion, for example coffee, thus the aforementioned machines are appropriate for combining great simplicity/versatility of use with optimal organoleptic properties of the beverage.

Typically, the machines for generating infused beverages comprise an infusion assembly provided with a first cup-shaped infusing element, normally named female infuser, and comprising a cavity adapted to house an infusion capsule and/or pod containing an aromatic essence, and a second element, normally named male infuser, adapted to close the aforesaid cavity such as to define an infusion chamber together with the first infusing element.

The capsule, containing the aromatic essence, is placed or transported into the infusion chamber so that the extraction of the aromatic essence occurs with the injection of pressurized hot water into the infusion capsule and/or pod.

The infusion chamber communicates with at least one outlet duct for the outflow of the infused beverage, ending with an outlet nozzle or hopper for the outflow of the beverage.

These machines for preparing infused beverages are typically designed for automatically inserting the capsule into the infusion chamber and for automatically ejecting it at the end of the delivery process.

EP1859714, ITMI20120700, EP 3730007 and EP2405790 describe known systems for inserting and subsequently ejecting a capsule or pod into/from the infusion chamber of a machine for preparing infused beverages, such as tea or coffee.

EP1859714 describes an infusing device for delivering a beverage from a pod containing a powdered preparation for preparing an infused beverage. The device being provided with a frame, a first and a second infusing element configured to form an infusion chamber adapted to contain the pod during the delivery. The first infusing element being movable along the frame with respect to the second infusing element.

Moreover, the device comprises a closing mechanism for activating the first infusing element, comprising a restraining element for restraining the pod and accommodating the capsule when inserting the capsule between the first and the second infusing elements and to hold it in position when closing the restraining elements.

Instead, EP2405790 describes a machine for preparing beverages by infusing, which is provided with an infusion assembly provided with a slide for introducing a capsule containing a powdered preparation. The machine further comprises a piston movable in a straight way between a first at rest position and a second working position such as to open and close an infusion chamber configured to accommodate the capsule.

The slide being positioned in an intermediate position between the first at rest position and the second working position. The slide is configured such as the capsule, in a preset at rest position, is positioned leaning on an edge of one of the two elements forming the infusion chamber.

The Applicant has however noted that these systems are complex and that the insertion of the capsule or pod into the infusion chamber may not be fluid, the capsule, due to its outer shaped profile, could in fact get jammed during the closing movement of an infusing element on the other.

The Applicant has thus addressed the problem of providing a machine for preparing an infused beverage provided with a device for the automatic insertion of the capsule or pod into an infusion chamber and its subsequent extraction, at the end of the delivery process, that does not have the problems of the known art.

Moreover, the Applicant has addressed the problem of providing a machine for preparing infused beverages provided with a system for automatically inserting and extracting the capsule or pod into/from an infusion chamber in a fluid way and which reduces the possibility of jamming between the capsule or pod and the infusing elements.

### Summary of the invention

Thus, in its first aspect, the invention concerns a machine for producing an infused beverage, for example coffee, comprising an infusion assembly comprising a first cup-shaped infusing element provided with a cavity for accommodating one infusion capsule or pod therein and a second infusing element for defining, when coupled to said first infusing element, an infusion chamber; said first and/or second infusing element being movable with respect to the other between an open position configured for inserting the infusion capsule or pod into the machine, and a closed position wherein said first and said second infusing elements are approached such as to define an infusion chamber;
said infusion assembly further comprising a slide for inserting said capsule or pod in an intermediate position between the first and second infusing elements in their open position, the infusion capsule or pod is held by said slide in said intermediate position and does not have further contact points with said first and/or second infusing element.

In the aforesaid aspect, the present invention may have at least one of the preferred features described hereunder.

According to the invention, the slide extends along an extension direction and, in said intermediate position, said extension direction is arranged to form an angle of less than 90° with a main axis identifiable from the movement of the first and/or second infusing element with respect to the other.

According to the invention, the slide is rotatable at least from said intermediate position to an operative position in which it at least partially inserts the infusion capsule or pod into said cavity.

According to the invention, the slide comprises at least one track extending along the extension direction of the slide and hinged for rotating at least from the intermediate position to the first operative position, upon the activation of one between the first or second infusing element in its movement towards and from said first or second infusing element.

According to the invention, the slide comprises two tracks hinged integrally so that the rotation of a track involves the rotation of the other track.

Conveniently, each track comprises a bearing element configured to at least partially abut against a first portion of the capsule, and a side wall arranged such as to at least partially contain the capsule or pod laterally.

Preferably, the slide comprises at least one locking element for holding the infusion capsule or pod together with the bearing element in the intermediate position.

Conveniently, the locking element comprises a countering element arranged on the side wall and configured to abut against a second portion of the capsule or pod; the countering element being spaced from the bearing element.

Advantageously, the first or second infusing element comprises at least one pusher element configured to abut against the slide and to displace the slide at least from the intermediate position to the first operative position.

### Brief description of the drawings

Such description will be stated hereunder with reference to the accompanying drawings provided by way of example only and thus not limiting, in which:
- figure 1 shows a schematic side view of an embodiment of an infusion assembly for a machine for producing an infused beverage, for example coffee, in an open position according to the present invention;
- figure 2 shows a schematic side view of the infusion assembly of figure 1 with the slide arranged in its intermediate position after having accommodated a capsule for producing an infused beverage;
- figure 3 is a schematic side view of the infusion assembly of figure 1 with the slide rotating to bring the capsule into the cavity of the first infusing element;
- figure 4 is a schematic side view of the infusion assembly of figure 1 with the slide rotated into its at rest position and the second infusing element closed on the first one to form the infusion chamber with the capsule contained therein; and
- figure 5 is a schematic side view of the infusion assembly of figure 1 with the slide returning to its intermediate position, during the movement towards the open position of the first and second infusing elements.

### Detailed description of embodiments of the invention

With reference to the figures, a machine for preparing an infused beverage by means of a capsule or pod 20 containing an aromatic substance according to the present invention is shown.

In a known way, the machine comprises an infusion assembly and an outer shell configured to contain at least the infusion assembly 1.

The infusion assembly 1, as shown in the figures, comprises a first cup-shaped infusing element 3 provided with a cavity 4 for accommodating a capsule or pod 20 therein and a second infusing element 5 which cooperates with the first infusing element 3 so that to define, when coupled therewith, an infusion chamber.

Hereunder, we will make specific reference to a capsule 20 for preparing an infused beverage, such as coffee, but what is set forth can also be applied to a pod without thereby departing from the protection scope of the present invention.

In a known way, the capsule 20 comprises a cup-shaped body 20a containing a given amount of a powdered substance for the infusion, such as for example powdered coffee, and is provided with a closing wall which seals the cup-shaped body 20a.

Preferably, as in the embodiments shown in the figures, the capsule 20 and in particular its cup-shaped body 20a comprise an annular flange 21 arranged at its upper end.

The first infusing element 3 and the second infusing element 5 are supported by a supporting frame 2. For example, said frame 2 has a parallelepiped box-shaped structure extending mainly along a main axis X-X which can be horizontal in a preferred embodiment.

The supporting frame 2 comprises two side plates 16 opposite one another and parallel to the main axis X-X. The first infusing element 3 and the second infusing element 5 are placed between and are supported by said side plates 16.

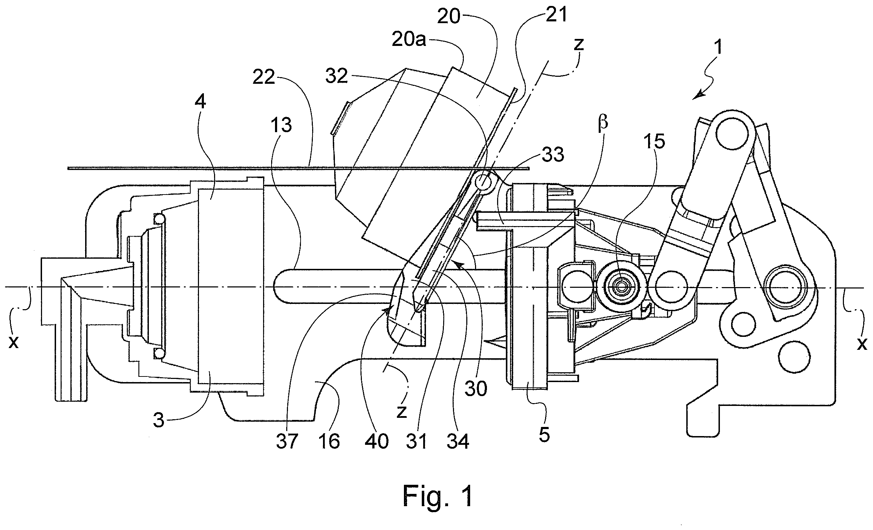

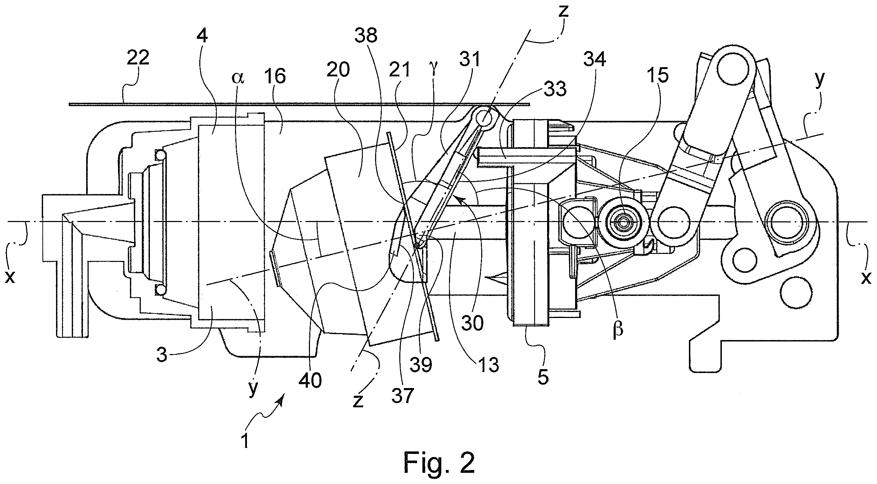

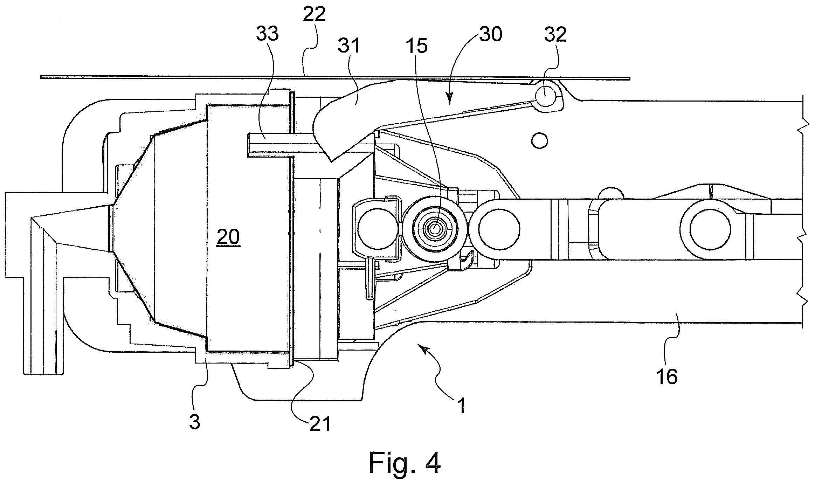

At least one between said first infusing element 3 and said second infusing element 5 is a movable infuser. Said movable infuser is translatable with respect to the other along a translation axis coincident with or parallel to the main axis X-X of the frame 2. The movable infuser, which in the preferred embodiment example shown is the second infusing element 5, is movable between an open retracted position shown in figures 1 and 2, and a closed forward position (shown in figure 4) for forming the infusion chamber.

In the closed position, the second infusing element 5 is alongside and adjacent to the first infusing element 3 so that to close its cavity 4 which houses the infusion capsule, thus achieving a hermetic seal.

For better clarity of exposition and according to the accompanying figures, reference will be made to the second infusing element 5 as the movable infusing element in the description hereunder, but it will be clear to the technician of the field that the teaching provided by the present invention can also easily be applied whenever the movable infusing element is the first infusing element 3.

Two supporting pins 15, extending substantially perpendicularly with respect to the main axis X-X, are present for guiding the translation of the second infusing element 3 towards and from said first infusing element 5.

The supporting pins 15 are combined with the one between the first 3 and the second 5 infusing element that is movable with respect to the other, the pins 15 are combined with the second infusing element 5 in the embodiment shown in the figures.

The supporting pins 15 are arranged diametrically opposite with respect to the movable infusing element 5.

The supporting pins 15 are held at their ends by the side plates 16 through appropriate guiding means.

According to an embodiment, the guiding means are represented by a couple of guide slots 13 obtained each in a respective plate 16.

Each slot 13 has a linear extent, substantially straight, in a direction parallel to the main axis X-X and extends for an extent such as to allow to move the second infusing element 5 from the closed position, shown in figure 4, to the open position shown in figures 1 and 2.

In the embodiment shown in the figures, an actuating lever configured to be operated by a user is present outside of the shell to actuate the translation of the second infusing element 5 from the open position, shown in figures 1 and 2, to the closed position shown in figure 4.

Alternatively, the translation of the second infusing element 5 from the closed position, shown in figure 4, to the open position, shown in figure 1, could be actuated by an electric motor driven by a control unit.

The actuating lever can extend from a distal position of the upper portion of the machine. In detail, always with reference to the embodiment shown in the figures, the actuating lever has a first end hinged to the shell and/or frame of the machine and a second free end not shown in the figures.

In the embodiment shown in the figures, the second end is in a less distal position with respect to the user.

The upper portion of the machine further comprises an inlet opening 22 configured to allow the access of the capsule or pod 20 to the infusion assembly 1 and, in detail, to the infusion chamber.

The inlet opening 22 is obtained on the outer surface of the shell positioned directly on top of the infusion assembly 1. In detail, in the embodiment shown in the figures, when the second infusing element 5 is in the open position shown in figure 1, the inlet opening 22 is above the space between the first 3 and the second 5 infusing elements.

Moreover, at the inlet opening 22, there is a slide 30 constrained to the second infusing element 5 to facilitate the insertion of the capsule 20 into the cavity 4 of the first infusing element 5.

In particular, the slide 30 is configured for inserting the capsule 20 in an intermediate position shown in figure 2, between the first 3 and the second 5 infusing elements, when the latter are in their open position.

The slide restrains the capsule or pod 20, once inserted into the machine through the appropriate opening 22, in an intermediate position shown in figure 2, in which the capsule 20 is only supported by the slide 30, against the force of gravity, thus preventing it from falling, and does not have contact points with the first 3 or second 5 infusing element.

In the intermediate position, the capsule or pod 20 is oriented such as its extension axis Y-Y forms an angle α with the main axis X-X. Extension axis of the capsule 20 is to be understood as the extension axis of the cup-shaped body 20a of the capsule 20 which is generally orthogonal to the lying plane of the flange 21.

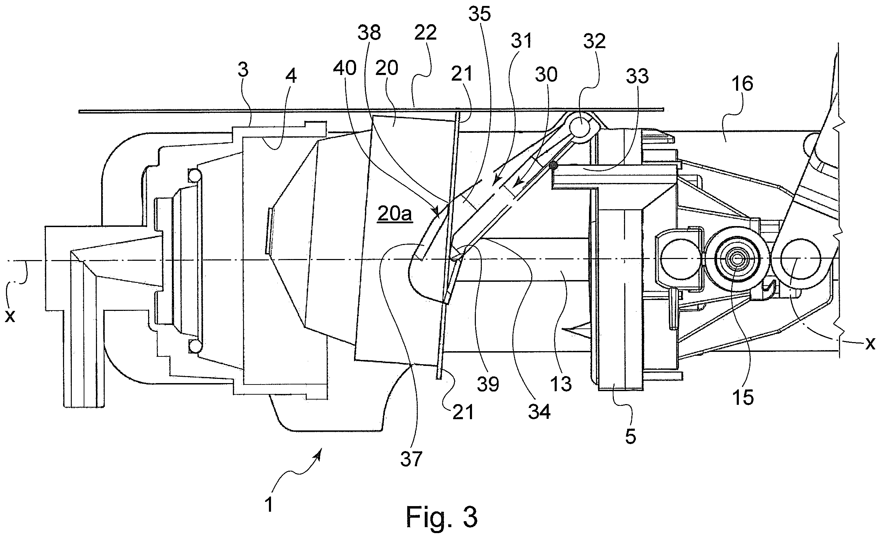

The slide 30 is rotatable at least from the intermediate position, shown in figure 2, to an operative position in which the capsule or pod 20 is inserted at least partially into the cavity 4, figure 3.

Preferably, the slide 30 is rotatable at least from the intermediate position, shown in figure 2, to an at rest position in which the capsule or pod 20 is inserted into the cavity 4, figure 4.

According to the invention, the slide 30 extends along an extension direction Z-Z and, in its intermediate position, the extension direction Z-Z is arranged to form an angle β of less than 90° with the main axis X-X.

In the embodiment shown in the figures, the slide 30, as better detailed hereunder, is hinged at an upper end thereof to the side plates 16 and can rotate with respect to such hinging point from the intermediate position (figs. 1 and 2) to its at rest position (fig. 4), by passing through an operative position shown for example in figure 3, where it has at least partially inserted the capsule 20 into the cavity 4.

In the operative position, the capsule 20, and in particular its cup-shaped body 20a, is brought to interfere with the inner wall of the cavity 4, thus determining the detachment of the capsule 20 from the slide 30, figure 3.

At this point, the closing of the second infusing element 5 on the first infusing element 3 determines the complete insertion and proper positioning of the capsule 20 in the infusion chamber that is formed, figure 4.

During the opening of the infusion chamber, at the end of the delivery process, the moving away between the first 3 and second 5 infusing elements determines the falling of the capsule 20 into an appropriate collection drawer, not shown in the figures, placed below the infusion assembly 1.

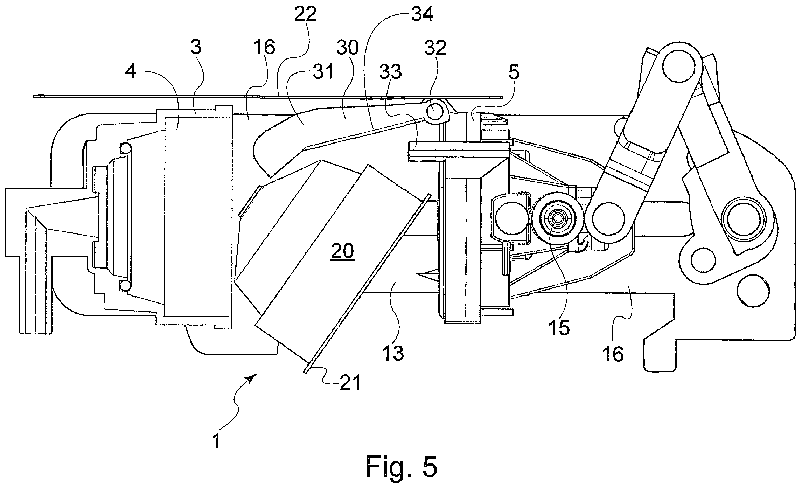

The step of opening the infusion chamber, generated by the moving away of the second infusing element 5 from the first infusing element 3, is shown in figure 5.

The aforesaid moving away involves the falling of the capsule 20 into an underlying collection drawer, the capsule 20 is no longer in fact held neither by the first or the second infusing element, nor by the slide 30 which is descending back from its at rest position, figure 5.

In the embodiment shown in the figures, the slide 30 comprises two tracks 31 hinged to the side plates 16.

The two tracks 31 are hinged, integrally to each other, to the two side plates 16 by two pins 32, such as the rotation of a track 31 also involves the rotation of the second track 31 in the same direction and by the same angular displacement.

In the embodiment shown in the figures, the rotation of the tracks 31 is actuated by the movement of the second infusing element 5 from and towards the first infusing element 3, in particular by two pushers 33 better described hereunder.

The two tracks 31 extend along the extension direction Z-Z.

Each track 31 comprises a bearing surface 34 configured to couple at least partially to a first portion of the capsule 20 or, whenever present as in the embodiment of the figures, to a portion of the flange 21, and a side wall 35 configured to at least partially retain the capsule 20 laterally.

The bearing surface 34, as the side wall 35, extend along the extension direction Z-Z of the slide 30.

Preferably, the side wall 35 has an extension, along the extension direction Z-Z of the slide 30, greater than that of the bearing surface 34.

The bearing surface 34 extends from the pin 32 for an extension dimension greater than 2 cm, preferably greater than 2.5 cm, anyhow less than 7 cm.

Preferably, the bearing surface 34 has a cross dimension of at least 2 mm, preferably of 3 mm, preferably a cross dimension of less than 7 mm.

The side wall 35 is arranged such as to contain the capsule 20 or, as in the embodiment shown in the figures, the flange 21 laterally.

The side wall 35 is preferably arranged substantially orthogonal to the bearing surface 34.

The slide 30 further comprises at least one locking element 40 for holding the infusion capsule or pod 20 together with the bearing element 34 in the intermediate position, thus preventing it from falling into the collection drawer before the infusion.

Preferably, the locking element 40 comprises a countering element 37 extending from the side wall 35 and configured to abut against a second portion of the capsule 20 or, as in the embodiment shown in the figures, against the flange 21.

The countering element 37 protrudes in a cross direction from the side wall 35, i.e. substantially in the same lying plane as the slide 30, but orthogonal to the extension direction Z-Z.

Preferably, each track 31 has a countering element 37.

The countering element 37 is spaced from the bearing element 34 such as to house the flange 21 of the capsule 20 between them and to allow a rotation of the capsule which causes, in the intermediate position, the lying plane of the flange 21 to rotate such as to form an angle γ with the extension axis Z-Z, this way, the capsule 20 orients itself depending on the cavity 4. Preferably, the angle γ that is formed in the intermediate position between the lying plane of the flange 21 and the extension axis Z-Z is greater than 30°, preferably greater than 40°.

In order to define a more proper rotation with respect to the cavity 4, the countering element 37 and the end of the bearing element 34 have respectively a first 38 and a second 39 inclined surface.

Preferably, the two pushers 33 are as cylindrical elongated elements extending from one between the first 3 and second 5 infusing elements which is movable with respect to the other.

In the embodiment shown in the figures, the two pushers 33 extend from the second infusing element 5.

Preferably, the two pushers 33 extend along a direction parallel to the main direction X-X such as to push the slide 30 in its rotation from the intermediate position to the at rest position.

Preferably, the two pushers 33 have an extension according to a direction parallel to the main direction X-X such as, by abutting against the slide 30 in its intermediate position, the latter has an inclination forming an angle β of less than 50° between its extension direction Z-Z and the main direction X-X.

The two pushers 33 have a reduced thickness in the cross direction, i.e. in the direction orthogonal to the main direction X-X such as, in the closed position of the second infusing element 5 on the first infusing element 3, to be inside the cavity 4 of the first infusing element 3 between the outer wall of the capsule 20 and the side walls of the cavity 4.

Several changes can be made to the embodiments described in detail, all anyhow remaining within the protection scope of the invention as defined by the following claims.

By way of example, in an embodiment not shown in the figures, the slide 30, when inserting the capsule 20, can be locked for some instants in a position such as to allow the capsule 20 to be able to read from an appropriate reader in order to detect possible codes placed on its outer surface.

## Claims

1. Machine for producing an infused beverage, for example coffee, comprising an infusion assembly (1) comprising a first cup-shaped infusing element (3) provided with a cavity (4) for accommodating one infusion capsule or pod (20) therein and a second infusing element (5) for defining, when coupled to said first infusing element (3), an infusion chamber; said first (3) and/or second (5) infusing element being movable with respect to the other between an open position configured for inserting the infusion capsule or pod (20) into the machine, and a closed position wherein said first (3) and said second (5) infusing elements are approached such as to define an infusion chamber;
said infusion assembly (1) further comprising a slide (30) for inserting said capsule or pod (20) in an intermediate position between the first (3) and second (5) infusing elements in their open position, the infusion capsule or pod (20) is held by said slide (30) in said intermediate position and does not have further contact points with said first (3) and/or second (5) infusing element or with elements combined with said first (3) and/or second (5) infusing element;
- said slide (30) extending along an extension direction (Z-Z) and, in said intermediate position, said extension direction (Z-Z) is arranged to form an angle β of less than 90° with a main axis (X-X) identifiable from the movement of said first (3) and/or second (5) infusing element with respect to the other;
- said slide (30) comprises at least one track (32) extending along said extension direction (Z-Z) and hinged for rotating at least from said intermediate position to an operative position in which said slide (30) at least partially inserts said infusion capsule or pod (20) into said cavity (4),
upon the activation of one between said first (3) or second (5) infusing element in its movement towards and from said first (3) or second (5) infusing element; **characterized in that**
- said slide (30) comprises two tracks (32) hinged integrally so that the rotation of a track (32) involves the rotation of the other track (32).

2. Machine (1) according to claim 1, **characterized in that** said first track (32) comprises a bearing element (34) configured to at least partially abut against a first portion of the capsule (4) or pod, and a side wall (35) arranged such as to at least partially contain said capsule or pod (20) laterally.

3. Machine (1) according to claim 3, **characterized in that** said slide (30) comprises at least one locking element (40) for holding the infusion capsule or pod (30) together with said bearing element (34) in said intermediate position.

4. Machine (1) according to claim 3, **characterized in that** said locking element (40) comprises a countering element (37) arranged on said side wall (34) and configured to abut against a second portion of the infusing capsule or pod (20); said countering element being spaced from said bearing element (34).

5. Machine (1) according to claim 1, **characterized in that** said first (3) or second (5) infusing element comprises at least one pusher element (33) configured to abut against said slide (30) and to displace said slide (30) at least from said intermediate position to said operative position, upon the activation of one between said first (3) or second (5) infusing element in its movement towards and from said first (3) or second (5) infusing element.

## Patentansprüche

1. Maschine zur Herstellung eines Aufgussgetränks, zum Beispiel Kaffee, umfassend eine Infusionsanordnung (1), die ein erstes becherförmiges mit einem Hohlraum (4) zur Aufnahme in seinem Inneren einer Aufgusskapsel oder -hülse (20) versehenes Infusionselement (3) und ein zweites Infusionselement (5) umfasst, das, wenn es mit dem ersten Infusionselement (3) verbunden ist, eine Infusionskammer bildet; wobei das erste (3) und/oder das zweite (5) Infusionselement relativ zum jeweils anderen bewegbar sind, zwischen einer offenen Position, die zum Einführen der Infusionskapsel oder -hülse (20) in die Maschine eingerichtet ist, und einer geschlossenen Position, in der das erste (3) und das zweite (5) Infusionselement zur Bildung einer Infusionskammer angenähert sind;
wobei die Infusionsanordnung (1) ferner eine Gleitbahn (30) zum Einführen der Kapsel oder Hülse (20) in eine Zwischenposition zwischen dem ersten (3) und dem zweiten (5) Infusionselement in deren offener Position umfasst, wobei die Infusionskapsel oder -hülse (20) von der Gleitbahn (30) in der Zwischenposition gehalten wird und keine weiteren Kontaktpunkte mit dem ersten (3) und/oder zweiten (5) Infusionselement oder mit Elementen, die mit dem ersten (3) und/oder zweiten (5) Infusionselement kombiniert sind, aufweist;
- wobei sich die Gleitbahn (30) entlang einer Erstreckungsrichtung (Z-Z) erstreckt und in der Zwischenstellung die Erstreckungsrichtung (Z-Z) derart angeordnet ist, dass sie mit einer Hauptachse (X-X) einen Winkel β von weniger als 90° bildet, der aus der Bewegung des ersten (3) und/oder des zweiten (5) Infusionselements relativ zum jeweils anderen identifizierbar ist;
- wobei die Gleitbahn (30) mindestens eine Schiene (32) umfasst, die sich entlang der Erstreckungsrichtung (Z-Z) erstreckt und so angelenkt ist, dass sie zumindest aus der Zwischenposition in eine Betriebsposition drehbar ist, in der die Gleitbahn (30) die Infusionskapsel oder -hülse (20) zumindest teilweise in den Hohlraum (4) einführt, bei der Aktivierung eines zwischen dem ersten (3) oder zweiten (5) Aufgusselement in seiner Bewegung zu dem ersten (3) oder zweiten (5) Aufgusselement hin und von ihm weg;
**dadurch gekennzeichnet, dass**
- die Gleitbahn (30) zwei Schienen (32) umfasst, die derart einstückig angelenkt sind, dass die Drehung einer Schiene (32) die Drehung der anderen Schiene (32) bewirkt.

2. Maschine (1) nach Anspruch 1, **dadurch gekennzeichnet, dass** die erste Schiene (32) ein zum zumindest teilweisen Anstoßen an einen ersten Abschnitt der Kapsel (4) oder Hülse konfiguriertes Lagerelement (34) und eine zum zumindest teilweisen seitlichen Einfassen der Kapsel oder Hülse (20) angeordnete Seitenwand (35) umfasst.

3. Maschine (1) nach Anspruch 3, **dadurch gekennzeichnet, dass** die Gleitbahn (30) mindestens ein Blockierelement (40) umfasst, um die Infusionskapsel oder -hülse (30) zusammen mit dem Lagerelement (34) in der genannten Zwischenstellung zu halten.

4. Maschine (1) nach Anspruch 3, **dadurch gekennzeichnet, dass** das Blockierelement (40) ein Gegenelement (37) umfasst, das an der Seitenwand (34) angeordnet und so eingerichtet ist, dass es an einem zweiten Abschnitt der Infusionskapsel oder -hülse (20) anstößt, wobei das Gegenelement von dem Lagerelement (34) beabstandet ist.

5. Maschine (1) nach Anspruch 1, **dadurch gekennzeichnet, dass** das erste (3) oder zweite (5) Infusionselement mindestens ein Schieberelement (33) umfasst, das so eingerichtet ist, dass es an die Gleitbahn (30) anstößt und die Gleitbahn (30) zumindest aus der Zwischenposition in die Betriebsposition verschiebt, bei Aktivierung eines zwischen dem ersten (3) oder zweiten (5) Infusionselement in seiner Bewegung auf das erste (3) oder zweite (5) Infusionselement zu und von ihm weg.

## Revendications

1. Machine pour produire une boisson infusée, par exemple du café, comprenant un ensemble d'infusion (1) comprenant un premier élément d'infusion en forme de tasse (3) pourvu d'une cavité (4) pour y accueillir une capsule ou une dosette d'infusion (20) et un second élément d'infusion (5) pour définir, lorsque couplé audit premier élément d'infusion (3), une chambre d'infusion; ledit premier (3) et/ou ledit second (5) élément d'infusion étant mobile par rapport à l'autre entre une position ouverte configurée pour insérer la capsule ou la dosette d'infusion (20) dans la machine, et une position fermée dans laquelle ledit premier (3) et ledit second (5) éléments d'infusion sont rapprochés de sorte à définir une chambre d'infusion;
ledit ensemble d'infusion (1) comprenant en outre une goulotte (30) pour insérer ladite capsule ou ladite dosette (20) dans une position intermédiaire entre le premier (3) et le second (5) élément d'infusion dans leur position ouverte, la capsule ou la dosette d'infusion (20) est retenue par ladite goulotte (30) dans ladite position intermédiaire et ne présente pas d'autres points de contact avec ledit premier (3) et/ou ledit second (5) élément d'infusion ou avec des éléments associés audit premier (3) et/ou audit second (5) élément d'infusion;
- ladite goulotte (30) s'étendant le long d'une direction d'extension (Z-Z) et, dans ladite position intermédiaire, ladite direction d'extension (Z-Z) est disposée de sorte à former un angle β inférieur à 90° avec un axe principal (X-X) identifiable dès le mouvement dudit premier (3) et/ou dudit second (5) élément d'infusion par rapport à l'autre;
- ladite goulotte (30) comprend au moins un rail (32) s'étendant le long de ladite direction d'extension (Z-Z) et articulé pour tourner au moins de ladite position intermédiaire vers une position opérationnelle, dans laquelle ladite goulotte (30) insère au moins partiellement ladite capsule ou ladite dosette d'infusion (20) dans ladite cavité (4), lors de l'activation du mouvement de l'un entre ledit premier (3) ou ledit second (5) élément d'infusion vers et depuis ledit premier (3) ou ledit second (5) élément d'infusion;
**caractérisé en ce que**
- ladite goulotte (30) comprend deux rails (32) articulés de manière solidaire de sorte à ce que la rotation d'un rail (32) implique la rotation de l'autre rail (32).

2. Machine (1) selon la revendication 1, **caractérisée en ce que** ledit premier rail (32) comprend un élément d'appui (34), configuré pour venir au moins partiellement en butée contre une première portion de la capsule (4) ou de la dosette, et une paroi latérale (35) disposée de sorte à au moins partiellement contenir ladite capsule ou ladite dosette (20) latéralement.

3. Machine (1) selon la revendication 3, **caractérisée en ce que** ladite goulotte (30) comprend au moins un élément de verrouillage (40) pour retenir la capsule ou la dosette d'infusion (30) conjointement avec ledit élément d'appui (34) dans ladite position intermédiaire.

4. Machine (1) selon la revendication 3, **caractérisée en ce que** ledit élément de verrouillage (40) comprend un contre-élément (37) disposé sur ladite paroi latérale (34) et configuré pour venir en butée contre une seconde portion de la capsule ou de la dosette d'infusion (20); ledit contre-élément étant espacé dudit élément d'appui (34).

5. Machine (1) selon la revendication 1, **caractérisée en ce que** ledit premier (3) ou ledit second (5) élément d'infusion comprend au moins un élément poussoir (33) configuré pour venir en butée contre ladite goulotte (30) et pour déplacer ladite goulotte (30) depuis au moins ladite position intermédiaire vers ladite position opérationnelle, lors de l'activation du mouvement de l'un entre ledit premier (3) ou ledit second (5) élément d'infusion vers et depuis ledit premier (3) ou ledit second (5) élément d'infusion.
